# EUROPEAN PATENT SPECIFICATION

(11) **EP 4 519 951 B1**
(45) Date of publication and mention of the grant of the patent: **11.03.2026**
(21) Application number: 23724180.7
(22) Date of filing: 04.05.2023
(51) Int. Cl.: H02J 1/14, H02J 3/14, H02J 3/38, H02J 15/00

(54) **A RENEWABLE ENERGY POWER PLANT COMPRISING A HYDROGEN GENERATING SYSTEM**
KRAFTWERK FÜR ERNEUERBARE ENERGIE MIT EINEM WASSERSTOFFERZEUGUNGSSYSTEM
CENTRALE ÉLECTRIQUE À ÉNERGIE RENOUVELABLE COMPRENANT UN SYSTÈME DE GÉNÉRATION D'HYDROGÈNE

(30) Priority: 05.05.2022 DK PA202270240
(43) Date of publication of application: 12.03.2025
(73) Proprietor: VESTAS WIND SYSTEMS A/S, 8200 Aarhus N (DK)
(72) Inventor: ABEYASEKERA, Tusitha, 8200 Aarhus N (DK)
(74) Representative: Vestas Patents Department
(86) International application number: PCT/DK2023/050110
(87) International publication number: WO 2023/213370

(56) References cited:
- EP-A1- 3 890 139
- WO-A1-2015/193064
- US-A1- 2007 001 461
- US-A1- 2014 021 785
- US-A1- 2017 110 883

## Description

### TECHNICAL FIELD

The invention relates to a renewable energy power plant comprising a hydrogen generating system that is powered by a wind turbine generator.

### BACKGROUND

It has long been known that hydrogen is a highly effective energy carrier which results in no CO₂ emissions when energy is released. It can be readily stored and transported making it a truly viable alternative to fossil fuels such as petrol and diesel. However, hydrogen production via water electrolysis, requires a tremendous amount of electricity thereby potentially reducing the positive environmental impact of moving to hydrogen fuel.

Hydrogen produced by renewable energy sources such as wind or solar power is the environmental ideal since no fossil fuels are used in its production. Hydrogen produced in this way is known as green hydrogen. However, because wind and solar power production is dependent on ever changing environmental conditions, it is difficult in practice to produce hydrogen efficiently from these power sources. One of the reasons for this is that when the power available to the electrolyser is low (such as below about 15% nominal load of the electrolyser) hydrogen can travel into the oxygen stream - a process known as hydrogen cross-over - which reduces efficiency and can present a safety issue.

A particularly efficient arrangement is to connect an electrolyser directly to the generator of a wind turbine generator in a DC-coupled connection. Such an arrangement can potentially provide many advantages in terms of lower cost due to the omission of a grid transformer and switchgear, and improved electrical efficiency as fewer power electronics need to be used. However, a major challenge to the DC-coupled concept is that the internal resistance of the electrolyser increases significantly when the voltage over the electrolyser is low. In this situation the current through the electrolyser will be drastically reduced and as a result the torque in the generator will drop significantly. As is well known in the art, sudden low generator torque is to be avoided as it leads to unbalanced loads, unwanted noise and improper control of rotor speed. This presents a large challenge to the DC-coupled concept at low wind turbine rotor speed.

PCT application WO2015/193064 relates to a track supply rectifier having a voltage rectifying arrangement with an AC voltage side and a DC voltage side, and a first circuit branch on the DC voltage side which has a capacitor (C) and a resistor (R1), and a basic load resistor (RG), characterized in that a voltage-controlled switching device is assigned to the basic load resistor (RG) and is suitable for connecting the basic load resistor (RG) if a DC voltage (U) applied on the DC voltage side reaches a previously stipulated upper limit value. It further relates to a method for operating a track supply rectifier. US patent application US2007/001461 discloses a method for controlling variability in power output of a wind farm supplying power to a grid includes monitoring a power output level of the wind farm. The monitored power output level is compared to a target power output level. A command is issued to increase or decrease electrical power consumption by an electrolyzer system electrically coupled to the wind farm to maintain a net power output level by the wind farm based upon the comparison.

It is against this background that the present invention has been developed.

### SUMMARY OF THE INVENTION

The invention is defined by the features of the independent claims. Preferred embodiments are defined in the dependent claims. According to an aspect of the present invention, and defined in claim 1, there is provided A renewable energy power plant for connection to a power network, the renewable energy power plant comprising:
a wind turbine generator;
a hydrogen generating system comprising:
   a hydrogen electrolysis system operable to generate hydrogen through electrolysis using power generated by the wind turbine generator; and
   a power converter system operable to provide a DC voltage input source for electrically coupling the wind turbine generator to the hydrogen electrolysis system;
   a connecting network for selectively connecting the power plant to the power network;
a power balancing system comprising one or more energy sources and one or more energy loads for balancing electrical power differences between the power generated by the wind turbine generator and the power consumed by the hydrogen electrolysis system; and
a control system for controlling the wind turbine generator, the connecting network, the power balancing system, and the hydrogen electrolysis system to control the voltage on the DC voltage input source to remain within a predetermined range.

In this manner, the power plant is selectively connectable to the power network, via the connecting network, such that the WTG (which may be a conventional grid-following WTG) can be operated in a disconnected / island mode of operation or a grid connected mode of operation, while the control system operates the power plant so as to optimise the generation of hydrogen by the electrolyser. For example, the control system may operate the WTG to supply voltage to the DC voltage input source within the predetermined range, whilst operating the hydrogen electrolysis system in dependence on the available wind power to ensure that the power consumption matches or follows the power generated by the WTG (e.g. by controlling cell activation of the electrolysis system). Advantageously, in this context, the control system can decouple the performance of the electrolyser from transient wind variations by controlling the power balancing system and/or the connecting network to balance instantaneous power differences between the WTG and the hydrogen generating system and act as a swing load.

It shall be appreciated that the invention therefore provides for various advantages and mitigates issues such as hydrogen cross-over.

For this purpose, the WTG may be one of a plurality of WTGs of the power plant. Additionally, it shall be appreciated that the power balancing system may be considered to balance active and/or reactive power within the power plant, where power is the rate of energy transfer and so the power balancing system may additionally or alternatively be considered to form an energy balancing system of the power plant.

In an example, the control system controls the power plant to supply additional power to the DC-link when the control system determines that the power available from the wind is less than a predetermined value, thereby avoiding a drop in voltage on the DC link. In particular, the power plant may supply the additional power by: controlling the power balancing system to supply power from at least one of the one or more energy sources, and/or controlling the connecting network to supply power from the power network.

In an example, the control system controls the power plant to receive excess power from the WTG when the control system determines that the power available from the wind is greater than a predetermined value, thereby avoiding a rise in voltage on the DC voltage input source. In particular, the power plant may receive the excess power from the WTG by: controlling the power balancing system to supply power to at least one of the one or more energy loads; and/or controlling the connecting network to supply power to the power network.

Optionally, the one or more energy sources, and/or the one or more energy loads, of the power balancing system may comprise: an energy storage system, optionally, wherein the energy storage system includes at least one of a battery energy storage system and a fuel cell system; a dispatchable energy source, optionally, wherein the dispatchable energy source is a diesel generator unit; and/or a power dissipation element of the DC voltage input source.

In an example, the control system may control the connecting network to selectively connect the WTG to the power network to control the renewable energy power plant in an island mode of operation or a grid connected mode of operation.

The power balancing system may, for example, comprise the energy storage system and the control system may control the connecting network to switch from the island mode of operation to the grid connected mode of operation in dependence on: the power available from the energy storage system falling below a lower threshold value; the power available from the energy storage system rising above an upper threshold value; an energy tariff; and/or a demand for a grid ancillary service. For example, the WTG and/or the energy storage system may be connected to the power network in the grid connected mode of operation to provide a frequency regulating service to the power network, whilst operating the hydrogen generating system to generate hydrogen.

Optionally, the control system may control the connecting network to switch from the grid connected mode of operation to the island mode of operation in dependence on wind speed falling below a predetermined minimum wind speed.

In an example, the power plant may further comprise: one or more auxiliary systems of the WTG, and/or the hydrogen electrolysis system, forming one or more auxiliary loads provided with operating power from at least one of the one or more energy sources of the power balancing system, and/or the power network. The control system may further control the auxiliary loads to control the voltage on the DC voltage input source to remain with a predetermined range.

Optionally, the renewable energy power plant may further comprise a start-up energy source for powering at least one of the auxiliary systems of the WTG to maintain the WTG in a standby-mode during a non-generating period, such that the WTG is operable to start generating power upon demand.

In an example, the start-up energy source may be provided by at least one of the one or more energy sources of the power balancing system.

Optionally, the control system may be further configured to detect wind speed falling below a predetermined minimum wind speed, and to carry out the following control actions: i) disable operation of the hydrogen electrolyser system, and ii) operate the connecting network and/or the power balancing system to provide power to the one or more auxiliary loads.

The control system may, for example, be further configured to control the one or more auxiliary loads to reduce a power requirement therefrom. For example, the control system may control the one or more auxiliary loads to reduce the power requirement therefrom in dependence on wind forecast data.

In an example, the power balancing system may comprise the energy storage system. Optionally, the power balancing system further comprises the power dissipation element of the DC-link. Optionally, the control system is further configured to monitor an available power parameter, representing the power available from the current wind conditions, and to monitor the total electrical load of the hydrogen electrolysis system and the one or more auxiliary loads, and is further configured to control at least one of the following systems for excess power absorption in the event that the available power parameter exceeds the total electrical load: a rotor of the WTG, the power dissipation element associated with the DC-link and the energy storage system of the power balancing system.

In an example, the control system may be configured to detect the magnitude of available power, and select the system for excess power absorption in dependence on the magnitude of the available power.

Optionally, the control system may be configured to control the power dissipation element to dissipate excess electrical energy from the DC link in the event that a voltage surge on the DC-link is detected.

The hydrogen electrolysis system may, for example, further comprise: a plurality of electrolysis cells arranged in one or more stacks, wherein each electrolysis cell comprises a pair of electrodes, and wherein each stack of electrolysis cells comprises at a plurality of electrical connectors each of which is in electrical contact with an electrode of an electrolysis cell, wherein the electrical connectors are electrically connectable to the DC-link by a network of selectively operable electrical conductors which are configured so that some or all of the electrolysis cells are operable in dependence on the operative condition of the selectively operable electrical conductors.

Optionally, the electrical connectors of at least one stack of electrolysis cells may be configured so that electrical current may enter the stack at a plurality of locations.

Optionally, the electrical connectors of at least one stack of electrolysis cells may be configured so that electrical current may exit the stack at a plurality of locations.

Optionally, the control system may be configured to control the selectively operable electrical conductors to enable all of the electrolysis cells when a monitored one or more operating characteristics are within a predetermined range of operation, and to enable only a portion of the electrolysis cells when the one or more monitored operating characteristics are outside of the predetermined range of operation.

Optionally, the one or more monitored operating characteristics include at least one of: i) available wind power; ii) DC-link voltage; iii) the one or more auxiliary loads; iv) electrolyser cell health; and/or v) electrolyser cell temperature. In this manner, the electrolyser can be switchably controlled to vary the number of active cells within the electrolyser in dependence on the available wind power so as to maintain a narrow range of current density and thereby to optimise hydrogen production.

Optionally, the one or more monitored operating characteristics include an amount of available energy at the energy storage system.

In an example, the selectively operable electrical conductors may be controlled by respective PWM control signals. The PWM control signal for each selectively operable conductor may, for example, have a controllable duty cycle.

Optionally, for each selectively operable conductor, the PWM control signal is ramped from a first duty cycle to a second duty cycle in order to change the operating state of the selectively operable conductor so as to reduce current spikes.

In an example, the network of selectively operable electrical conductors may be configured so that some or all of the electrolysis cells are connectable in series or parallel.

In an example, the wind turbine generator may comprise: a rotor coupled to a generator, a primary power converter coupled to the generator; and a wind turbine transformer for stepping-up the voltage level of the power output from the primary power converter to a voltage level of the main grid. The hydrogen generating system may, for example, comprise: a second power converter for electrically coupling a low voltage side of the wind turbine transformer to the hydrogen electrolysis system.

Optionally, the primary power converter may be a back-to-back converter.

Further optional and advantageous features of the invention are described in the discussion that follows and are set out in the dependent claims.

Within the scope of this invention it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described, by way of example only, with reference to the accompanying drawings, in which:
Figure 1 is a schematic view of a renewable energy power plant in which a hydrogen generating system in accordance with the invention may be incorporated;
Figure 2 is a schematic view which shows more details of an electrolyser of the power plant shown in Figure 1;
Figure 3 is a schematic view of a control system aspect of the power plant shown in Figure 1; and
Figure 4 is a schematic view of another control system aspect of the power plant shown in Figure 1.

### DETAILED DESCRIPTION

The following detailed description refers to the accompanying drawings that show, by way of illustration, specific details and embodiments in which the invention may be practiced. These embodiments are described in sufficient detail to enable those of ordinary skill in the art to practice the invention. Other embodiments may be utilised, and structural changes may be made without departing from the scope of the invention as defined in the appended claims.

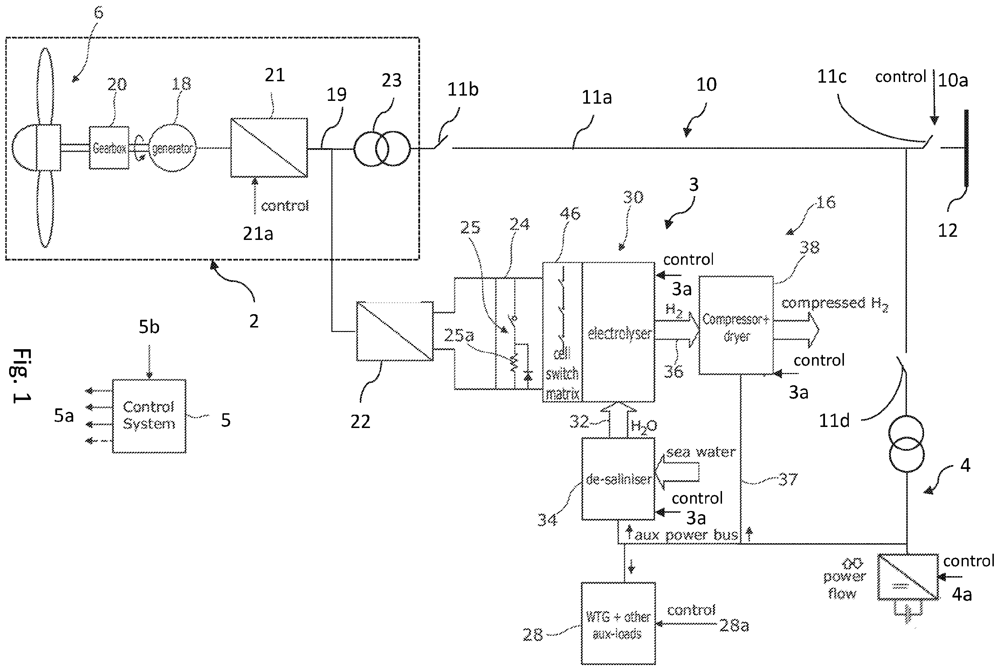

Figure 1 illustrates an example architecture in which a renewable energy power plant, such as a wind power plant (WPP), including a hydrogen generating system and a power balancing system, is connected to a main grid as part of a wider power network. As will be understood by the skilled reader, a WPP comprises at least one wind turbine generator (WTG), and is also known as a wind park or a wind farm, while WTGs are also known as wind turbines.

The example shown in Figure 1 is representative only and the skilled reader will appreciate that other specific architectures are possible. For example, the power plant may include other renewable energy sources, such as a solar power plant, a bio energy power plant, an ocean/wave/tidal energy plant, or a hybrid power plant having a combination of different types of renewable energy power plants. Thus, the invention also relates to renewable energy power plants and renewable energy generators in general, rather than being exclusive to wind power plants and generators as in the Figures.

The components of the wind power plant and the power network are conventional and as such would be familiar to the skilled reader. It is expected that other known components may be incorporated in addition, or as alternatives, to the components shown and described in Figure 1. Such changes would be within the capabilities of the skilled person.

Figure 1 shows a systems-level overview of a WPP 1 in which the invention can be implemented. The WPP 1 includes a WTG 2, a hydrogen generating system 3, an energy storage system 4 and a control system or power plant controller 5, referred to hereafter as PPC 5.

Although not illustrated in this Figure, the WPP 1 may also include compensation equipment, such as a static synchronous compensator (STATCOM) or another type of synchronous compensator, configured to provide reactive power or reactive current support as required.

In this example, the WPP 1 is shown to include a single WTG 2 for the sake of simplicity, but in other examples it shall be appreciated that the WPP 1 may include one or more WTGs. For example, the WPP may include a plurality of WTGs in an offshore fixed bottom, an offshore floating, or an onshore, power plant where the hydrogen generating system 3 and the energy storage system 4 are centrally connected at the wind park's substation AC bus.

The WTG 2 is a conventional grid-following wind turbine that would typically be used to generate electrical energy in AC form for supply to an associated electrical distribution grid or power network. The WTG 2 may therefore take the form of a well-known horizontal-axis wind turbine which is the most common form of large-scale wind turbine, but other formats would be acceptable for the invention.

The WTG 2 includes a main rotor arrangement 6, hereinafter referred to as the 'rotor', including a hub and a plurality of wind turbine blades (not shown) connected to the hub, which drives an electrical generator 18 through a gearbox 20. It is to be noted that although a gearbox is a component that is typical in utility-scale wind turbine generators, systems are also known that are based on a so-called direct drive architecture which do not use a gearbox. The embodiments of the invention are applicable to both types of systems.

The generator 18 is electrically connected to a first or 'primary' power converter system 21. Typically, the generator 18 and the primary power converter system 21 would operate on a three-phase electrical architecture, although this is not essential.

The primary power converter system 21 provides a back-to-back power converter system architecture that is common in utility-scale wind turbines for the provision of variable frequency electrical power and associated reactive power support. Accordingly, the primary power converter system 21 includes an AC-DC converter, a DC-AC converter and a DC-link connected therebetween.

The primary power converter system 21 is coupled to a wind turbine transformer 23 for stepping-up the voltage level of the power generated by the WTG 2 for supply to an associated electrical distribution grid or power network. The primary power converter system 21 is therefore coupled to the wind turbine transformer 21 via a low-voltage WTG bus 19.

On a low voltage side of the wind turbine transformer 23, the WTG 2 is electrically coupled to a second power converter system 22, via the low-voltage WTG bus 19, and the second power converter system 22 provides a DC input power source to the hydrogen generating system 3. In this manner, the WTG 2 is connected to the hydrogen generating system 3 and supplies power to the hydrogen generating system 3 to store energy in the form of hydrogen gas using an electrolysis system.

The second power converter system 22 would typically operate on a three-phase electrical architecture as well, although this is not essential. The precise form of converter implemented as the second power converter system 22 would be within the capabilities of the skilled person. At a basic level the second power converter system 22 may be implemented as a transformer electrically coupled to a passive rectifier unit, such as a 12-pulse rectifier unit, and a filter for filtering low harmonic distortion. Such a rectifier may be implemented with suitable semi-conductor devices such as diodes, thyristors and/or transistor-based switching devices. The choice of current switching device such as diodes, thyristors and semi-conductor switches is within the capabilities of a skilled person.

The second power converter system 22 is used to convert the AC power output by the primary power converter system 21 into DC power, which is provided to an electrolysis system 16 of the hydrogen generating system 3 by way of a DC-link 24.

As is usual with DC link based power systems, the DC link 24 is equipped with a power dissipation system 25, which may be referred to as a 'chopper'. As would be understood by a skilled person, the power dissipation system 25 comprises a large resistance 25a that is switchable across the DC link with a variable duty cycle so as to provide the capability to dissipate a predetermined amount of energy from the DC link as heat in certain circumstances, with the aim of reducing the voltage of the DC link 24. Typically the power dissipation system 25 may be activated during power spikes/surges where excess energy is placed onto the DC link 24 before the rotor 6 is able to down-regulate the mechanical input power to the generator 18.

Turning to the electrolysis system 16 of the hydrogen generating system 3 in more detail, in overview that system comprises an electrolysis cell stack or 'electrolyser' 30. The electrolyser 30 is fed with an input water stream 32 by a de-saliniser 34. The de-saliniser 34 is a known system that would be understood by the skilled person and so a full technical description will be omitted. The de-saliniser 34 constitutes a source of water which is particularly suited in an offshore setting because the de-saliniser 34 can draw water from the sea and provide purified water from the electrolyser 30. In principle an alternative water source such as a fresh-water tank or onshore pipe could be used, but in an offshore setting a de-saliniser is believed to be a convenient means for providing fresh water to the electrolyser 30.

The electrolyser 30 provides a hydrogen output stream 36 to a compressor 38 which also serves a drying function. In this embodiment, the electrolyser 30 is of the type to provide non-pressurised hydrogen, that is to say hydrogen at substantially atmospheric pressure, such that a compressor is required to pressurise the hydrogen output stream for usage and/or storage purposes.

It should be noted at this point however that as an alternative to the electrolyser 30 and the compressor 38, it is envisaged that an electrolyser operating at high pressure would be used, as would be understood by a skilled person.

The electrolysis system 16 is principally supplied with power from the WTG 2 and uses that power to generate the hydrogen output stream 36. However, the power generated by the WTG 2 is variable due to changing environmental conditions, such as wind speed. Consequently, during the operation of the WTG 2 there are instantaneous power differences between the power generated by the WTG 2 and the power draw of the electrolysis system 16. Such power differences would ordinarily lead to a drop, or a rise, in voltage at the DC-link 24 and, in turn, problems such as hydrogen cross-over.

However, to mitigate this issue, the WPP 1 of the present invention also includes the energy storage system 4 and a connecting network 10 for connecting the WPP 1 to the main grid 12. The energy storage system 4 and/or the main grid 12 are therefore able to provide power support to the DC link 24 in various scenarios, as described in more detail below.

For example, the main grid 12 and/or the energy storage system 4 may be used to supply additional power to the electrolyser 30 during wind conditions that are insufficient to generate sufficient power. Alternatively or additionally, the main grid 12 and/or the energy storage system 4 may be used to consume, absorb, or store excess power from the WTG bus 19 during transient conditions and in circumstances where there may be a mismatch between the generated power and the power that is absorbed/used/consumed by the electrolyser 30. In this manner, the main grid 12 and the energy storage system 4 are able to account for the instantaneous power differences between the WTG 2 and the hydrogen generating system 3, and to provide power balancing functionality to maintain a voltage level at the DC-link 24.

Connecting networks are known in the art and may comprise a combination of transmission lines, buses and/or transformers, as well as other components such as circuit breakers, reclosers, and other systems known in the art.

In this example, the connecting network 10 includes a wind park substation power bus 11a, connected to a high voltage side of the wind turbine transformer 23 by a first switching device 11b. The connecting network 10 also includes a second switching device 11c for connecting the wind park substation power bus 11a to the main grid 12, and a third switching device 11d for connecting the energy storage system 4 to the wind park substation power bus 11a.

It shall be appreciated that the second switching device 11c is operable to selectively disconnect the WPP 1 from the main grid 12 to form a self-contained micro-grid, or island. Accordingly, during a grid-connected mode of operation (with the WPP 1 connected to the main grid 12 via the second switching device 11c), power can be supplied from, or dispatched to, the main grid 12 in addition to, or as an alternative to, the energy storage system 4 in order to provide the power balancing functionality. However, during a disconnected or island mode of operation, it shall be appreciated that the main grid 12 is not available for power balancing functionality, which is provided by the energy storage system 4 instead.

It should also be noted at this point that the WPP 1 also comprises various auxiliary load(s) 28, including sub-systems of the hydrogen generating system 3 and/or the WTG 2, that draw electrical power. Such auxiliary loads 28 may include sub-systems such as environmental conditioning systems, hydraulic systems, yaw systems, lighting systems, computing systems and so on, as would be within the understanding of a skilled person.

In Figure 1, the auxiliary loads 28, the de-saliniser 34 and the compressor 38, are all shown to be connected together and further connected to the energy storage system 4 by way of a power bus 37 of the WPP 1. The power bus 37 carries electrical power to each such system via the energy storage system 4.

In this manner, the main grid 12 and/or the energy storage system 4 are also used to supply additional power to maintain the operation of the sub-systems of the hydrogen generating system 3 and the WTG 2 during wind conditions that provide insufficient power. Moreover, during a disconnected or island mode of operation, the energy storage system 4 may be operated as a start-up or idling energy source for powering the auxiliary loads to maintain the WTG 2 in a standby-mode while the WTG 2 is not generating power, for example due to insufficient wind speed. Consequently, the WTG 2 is operable to start generating power when the wind speed increases/upon demand.

The energy storage system 4 may be embodied by any suitable means, and may take the form of a battery storage system (BESS), as shown in Figure 1, including a transformer and an inverter for providing an AC power source. It shall be appreciated that the energy storage system 4 is configured to absorb and provide the difference in instantaneous power sourced by the varying wind power and absorbed by the electrolysis system 16. Accordingly, the storage capacity of a suitable BESS, for example, may therefore be determined by calculating or simulating a time integral of difference in sourced and absorbed load power.

More generally, the energy storage system 4 forms part of a power balancing system within the WPP 1, where the power balancing system may be embodied by various combinations of equipment acting as energy sources that supply electrical power and energy loads that absorb, store, or otherwise consume electrical power in other embodiments of the invention.

For example, in other embodiments, the energy storage system 4 may be replaced by a dispatchable energy source, such as diesel generator unit, and the power dissipation system 25 of the DC-link 24 may be operated to dissipate power spikes/surges where excess energy is placed onto the DC link 24 before the rotor 6 is able to down-regulate the mechanical input power to the generator 18.

Hence, in other embodiments of the present invention, the WPP 1 may include one or more energy sources and or more energy loads in addition to, or as an alternative to, the energy storage system 4.

The WPP 1 also comprises a control system or power plant controller (PPC) 5. The control system 5 is shown here as a single functional block for simplicity, although it should be noted that this is not intended to infer any physical or logical restrictions on the actual implementation of the control system 5. As such, the control system 5 may be implemented as a standalone computing device which is configured to communicate via a wired or wireless connection with the systems, sub-systems, sensing units and so on under its control. The control system 5 may also be implemented as distributed control units, for example to provide redundancy. The precise physical and logical implementation of the control system 5 is not central to the invention. Rather it is the functionality provided by the control system 5 and as discussed herein that is of prime importance.

The PPC 5 is therefore provided with a plurality of control channels 5a to the following items: the WTG 2 (shown as control input 21a), e.g. to the primary power converter system 21, the auxiliary loads 28 (shown as control input 28a), the hydrogen generating system 3 (shown as control input 3a), the energy storage system 4 (shown as control input 4a), and the connecting network 10 (shown as control input 10a), e.g. to control the first, second and third switching devices 11b, 11c, 11d.

The respective control channels are configured to provide control commands to the relevant systems from the control system 5. The control channels are also configured to return sensing information to the control system 5 that it may need to perform its control objectives. The control system 5 is also configured to receive data input 5b from other sources. Such data input may include: pitch angle (β) of one or more blades of the rotor, rotational speed of the generator (w_g), wind speed (w_spd).

Notably, the control system 5 is coupled to the WTG 2, the auxiliary loads 28 and the hydrogen generating system 3 such that the power draw from the auxiliary loads 28 and the hydrogen generating system 3 can be varied according to the available power from the WTG 2. The control system 5 is further coupled to the energy storage system 4 and the connecting network 10 to account for transient power differences between the other systems.

The arrangement therefore provides the capability to at least partially de-couple the operation of the electrolysis system 16 from the variable speed of the wind, and therefore the variable power generation. For example, as will become apparent from the discussion that follows, the control system 5 is operable to supply power to the DC link 24 from the energy storage system 4 and/or the main grid 12 in the event that available wind power drops such that the required DC link 24 voltage is not able to be maintained at required levels through operation of the WTG 2, and the primary power converter system 21, alone. In summary, the control system 5 is configured to regulate the systems under its control to maintain a predetermined voltage on the DC link 24 despite a significant variation in the available wind power.

Before describing the functionality of the control system 5 in more detail, discussion will first focus on the structure of the electrolyser 30 for the benefit of the later discussion. It should be noted that in principle any suitable type of electrolyser 30 may be used, the specification of which would be within the understanding of a skilled person. However, in the illustrated embodiment the electrolyser includes structure and functionality which means that the number of active cells within the electrolyser 30 can be varied. This provides various advantages within the context of the invention which will become apparent in the discussion that follows.

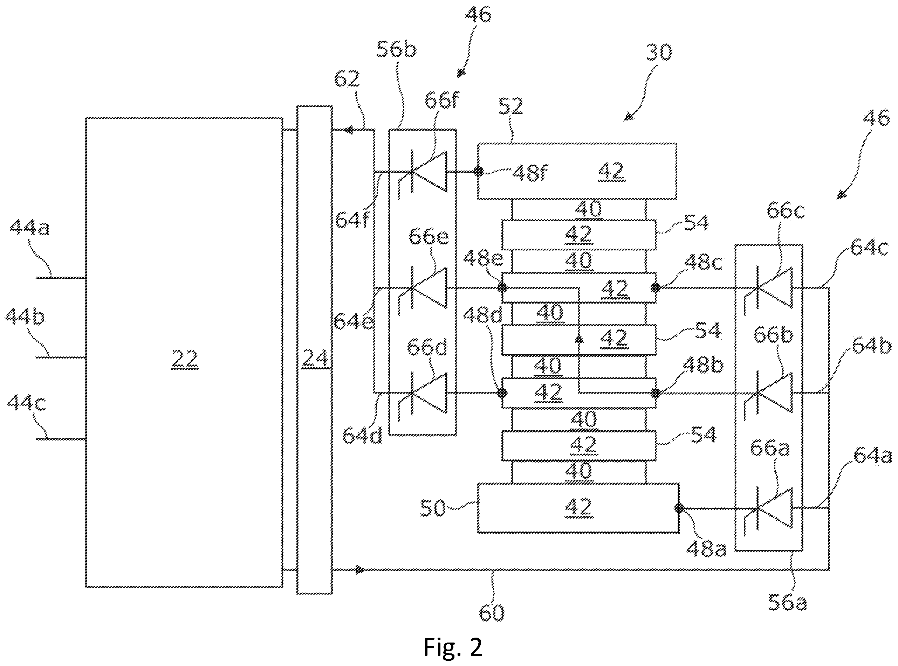

The electrolyser 30 is shown in more detail in Figure 2, also in schematic form. With reference to Figure 2, it can be seen that the electrolyser 30 comprises a plurality of electrolysis cells 40 arranged in a stack. Each of the electrolysis cells 40 comprises a pair of electrodes 42 for carrying electrical current to and from the electrolysis cells 40 in use. The electrodes 42 located between adjacent cells 40 in the stack may be electrically connected to one another via an intermediate electrical conductor so that current may flow in series between the cells 40 in the stack. Alternatively, the electrodes 42 located between adjacent cells 40 may abut one another or may be integral with one another. The electrodes 42 of adjacent cell 40 in the stack may therefore be referred to as being electrically adjacent. The electrolyser 30 may be any suitable type of electrolyser known in the art such as a PEM electrolyser or an alkaline electrolyser.

As can be seen in Figure 2, the three phases of AC power produced by the generator 18 and output by the primary power converter system 21 are connected to the second power converter 22 by respective electrical conductors 44a, 44b, 44c. The AC current from the primary power converter 21 is converted to DC current by the second power convertor 22 and supplied to the DC link 24.

The second power converter system 22 is connected to the electrolyser 30 by way of a switching module 46. The switching module 46 is shown generally in Figure 1 and in more detail in Figure 2. For the purpose of this discussion, the switching module 46 may be considered to be part of the electrolyser 30. The switching module 46 has an appropriate structure and provides appropriate connections to operate cells 40 in the stack selectively. The switching module 46 will now be described in more detail.

The electrolyser 30 comprises a plurality of electrical connectors 48a, 48b, 48c, 48d, 48e, 48f which are connected to selected electrodes 42 of the electrolysis cells 40 forming the stack. The first electrical connector 48a is connected to the input electrode 42 of the electrolysis cell 40 located at a first end 50 of the electrolyser 30 and the sixth electrical connector 48f is connected to the output electrode 42 of the electrolysis cell 40 located at a second end 52 of the electrolyser 30.

The second and fourth electrical connectors 48b, 48d are connected to a first pair of electrically adjacent electrodes (which may be integral) part way along the stack of electrolysis cells 40, and the third and fifth electrical connectors 48c, 48e are connected to a second pair of electrically adjacent electrodes (which may be integral) a further part way along the stack of electrolysis cells 40. Thus, the electrolyser 30 may be split into three independently operable sections 54 depending on how the electrical connections to the electrolyser 30 are made.

In this embodiment the switching module 46 is embodied by two banks 56a,56b of switches and the DC link 24 is connected to the electrolyser 30 by way of the switching banks 56a,b. In this embodiment, the switching banks 56a,b are illustrated as thyristors although the skilled person would appreciate that other switch means would be appropriate, for example other semiconductor switching devices such as MOSFETs, JFETs, IGBTs and so on. To give an example, in some embodiments IGBTs may be considered more suitable for providing a soft switching approach for connecting the DC-link 24 to the electrolyser 30 as will be described in more detail below.

The DC link 24 is connected across the electrolyser 30 by a pair of electrical conductors 60, 62. A first one of the pair of electrical conductors 60 is connected to the first switching bank 56a, which provides three selectively controlled branch electrical conductors 64a, 64b, 64c. Similarly, the second of the pair of electrical conductors 62 is connected to the second switching bank 56b which provides three selectively controlled branch electrical conductors 64d, 64e, 64f. Each of the branch electrical conductors 64a, 64b, 64c, 64d, 64e, 64f is selectively connectable to an electrode 42 of the electrolyser 30 via thyristors 66a, 66b, 66c, 66d, 66e, 66f.

The first branch conductor 64a is connected to the first electrical connector 48a via thyristor 66a. Similarly, the sixth branch conductor 64f is connected to the sixth electrical connector 48f via thyristor 66a. The second and fourth branch conductors 64b, 64d are connected to the second and fourth electrical connectors 48b, 48d via thyristors 66b, 66d respectively, and the third and fifth branch conductors 64c, 64e are connected to the third and fifth electrical connectors 48c, 48e via thyristors 66c, 66e respectively.

As is well known in the art, current may only pass through a thyristor when a small control current is applied to the gate of the thyristor. Thus, the thyristors 66a-f constitute electronic switches which selectively allow electrical connection of the branch conductors 64a-f to the electrical connectors 48a-f of the electrolyser 30. It is therefore possible to selectively operate different parts of the electrolyser 30 in dependence on the amount of power being provided by the generator as will be described in greater detail below.

For example, in use if the power provided by the generator 18 to the electrolyser 30 is at or above a first predetermined power output, e.g. 15%, of the rated maximum nominal load of the electrolyser 30, the entire length of the stack of electrolysis cells 40 forming the electrolyser 30 can be activated or 'energised'. This is achieved by applying a control current to the gates of the first and sixth thyristors 66a, 66f to allow current to flow from the first end 50 to the second end 50 of the electrolyser 30 thereby utilising every electrolysis cell 40 in the stack. Alternatively, should the power available from the generator 18 be below 15% of the rated maximum nominal load of the electrolyser 30 the number of active electrolysis cells 40 can be reduced by selective operation of the thyristors 66a to 66f.

For example, if the power available from the generator 18 is less than the first predetermined power output (e.g. 15% as discussed above) but greater than or equal to a second predetermined power output (e.g. 10% of the rated maximum nominal load of the electrolyser 30) a control current may be applied to the gates of the first and fifth thyristors 66a, 66e to allow current to flow from the first end 50 through the first and second sections of the stack of cells 40, so that those activated cells experience a current flow above the threshold, even though the operating power is lower than the threshold of the whole electrolyser 30. Alternatively, a control current may be applied to the gates of the second and sixth thyristors 66b, 66f to allow current to flow through the second and third sections of the of the stack of cells 40 forming the electrolyser 30.

As another operational example, if the power available from the generator 18 is less than the second predetermined threshold, e.g. 10%, and greater than or equal to a cut-off minimum power of the rated maximum nominal load of the electrolyser 30, a control current may be applied to the gates of the first and fourth thyristors 66a, 66d to allow current to flow from the first end 50 through only the first section of the of the stack of cells 40. Alternatively, a control current may be applied to the gates of the second and fifth thyristors 66b, 66e to allow current to flow through only the second section of the of the stack of cells 40. In a further alternative, a control current may be applied to the gates of the third and sixth thyristors 66c, 66f to allow current to flow through only the third section of the of the stack of cells 40.

From the above discussion, therefore, it will be appreciated that the switching module 46 can be controlled to regulate the number of cells of the electrolyser 30 that are energised in dependence on various operational parameters - e.g. the power output of the generator or the power available from the wind - in order to maintain the electrolyser stack in a more efficient state of operation in which current density to the cells is controlled to maximise H2 production.

The choice of which section(s) of the electrolyser 30 to operate at any given time may be determined with reference to the usage history and/or a physical condition of the sections of the cells in the stack. For example, the section(s) of the electrolyser 30 may be selected for operation with reference to the total operational time of the section(s) in question so that the total operational time is balanced between the available sections as far as possible. This helps to prolong the operative life of the electrolyser 30 by preventing excessive wear in one or more sections of the electrolyser while leaving other sections relatively unused. If one or more sections of the electrolyser become worn it is necessary to replace the entire electrolyser 30. It is therefore desirable to distribute the total operational time between the various sections as evenly as possible.

Alternatively, or additionally, the choice of which section(s) of the electrolyser 30 to operate at any given time may be determined with reference to a physical condition of the sections of the cells in the stack such as internal resistance. For example, the internal resistance of the sections of the electrolyser may be determined in real time or for example be determined via a database reference or based on modelling of the resistance and the section(s) with the lowest internal resistance selected. If this selection method is used in combination with the total usage time selection method, priority may be given to one or other of the methods, or an algorithm may be used to determine which section(s) 32 of the electrolyser 30 to use at any given point in time.

It should be noted that operational control of the thyristors 66a-f is provided by the control system 5.

Having described the schematic overview of the WPP 1 with reference to Figures 1 and 2, the discussion will now turn to specific functionality features of the control system 5 taken in context with the WPP 1.

There are three main control aspects associated with the invention. The first control aspect relates to how to control the WTG 2, and particularly the primary power converter system 21 thereof, to control the voltage on the DC link of the primary power converter system 21 to a predetermined value, or within a range of that predetermined value. For example, the DC voltage may be allowed to vary in a range of 10% around a DC reference level in order to allow the generator 18 to feed in a corresponding varying DC current to the electrolyser 30. The second control aspect relates to how to control the cell activation of the hydrogen generating system 3 to ensure that the power consumed by the electrolyser 30 matches or follows the power generated by the WTG 2. The third control aspect relates to how to provide a power balancing functionality to deal with instantaneous power differences between the power generated by the WTG 2 and the power consumed by the hydrogen generating system 3 and/or the auxiliary loads 28.

In this manner, the voltage level of the DC-link 24 to the electrolyser 30 can be primarily held within a narrow band due to the voltage control on the DC link of the primary power converter system 21 according to the first control aspect with coordinated active/reactive power control of the energy storage system 4 and WTG 2 according to the third control aspect.

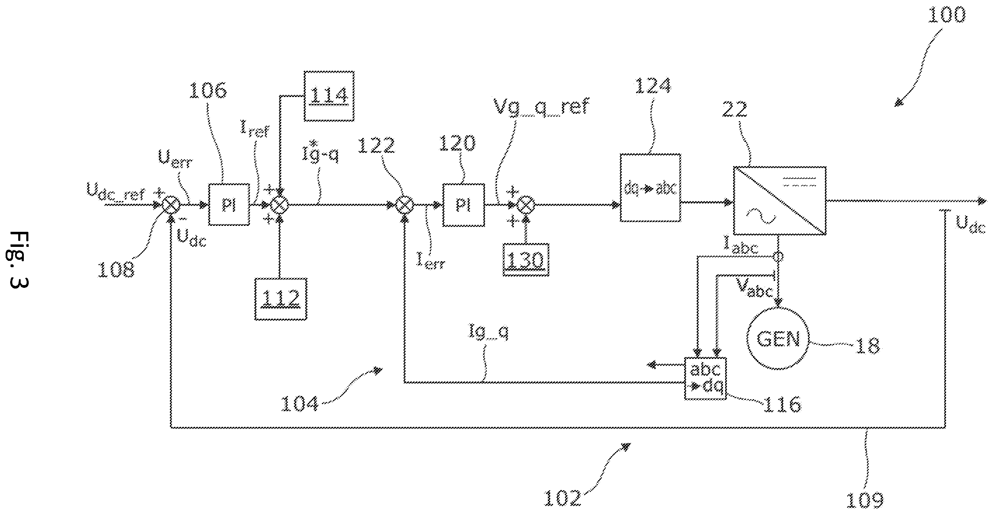

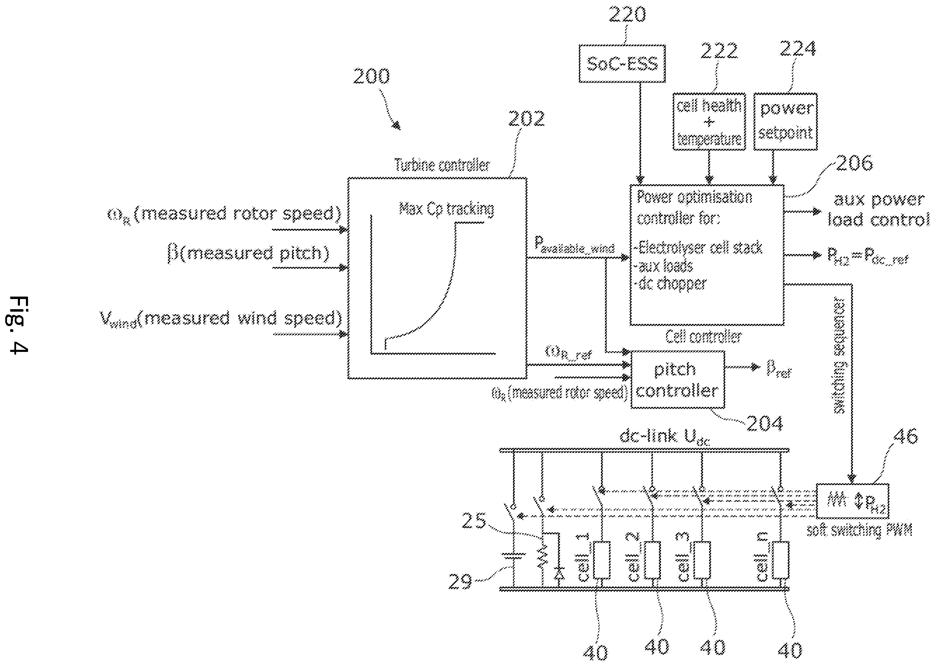

The three control aspects shall be considered in turn in the following description, where Figure 3 illustrates a control scheme or algorithm 100 that is configured to control the voltage on the DC link of the primary power converter system 21 to a predetermined level according to the first control aspect and Figure 4 depicts a high-level control scheme 200 for controlling the cell activation for the electrolyser 30 by way of the switching module 46 according to the second control aspect.

### Figure 3 - outer control loop

Referring firstly to Figure 3, the control scheme 100 includes an outer loop 102 and an inner loop 104. The outer loop 102 and the inner loop 104 function in a complementary way to control the voltage on the DC link of the primary power converter system 21 to a predetermined value, or within a range of that predetermined value. For example, the DC voltage may be allowed to vary in a range of 10% around a DC reference level, or a tighter range may be configured to more precisely control the DC voltage to a single value.

The role of the outer loop 102 is to minimise the error between a desired voltage on the DC link and the actual or measured DC-link voltage. It does this by generating a current reference for controlling the primary power converter system 21 in order to inject a required current onto the DC link thereby to match the current supplied to the DC link with the current load on the DC link, for example due to the operation of the electrolyser 30, auxiliary loads 28, de-saliniser 34 and compressor 38.

To this end, the outer loop 102 comprises a first control module 106 which is configured to receive a voltage error value Uerr from summing junction 108. The first control module 106 outputs a current reference Iref. The current reference Iref is input into a second summing junction 110. The voltage error value Uerr is generated by summing junction 108 which subtracts a DC link voltage level Udc from a voltage reference level for the DC link, shown here as Udc_ref. The DC-link voltage level Udc is generated by measuring the voltage on the DC-link, and is shown here as a feedback loop 109 from the voltage output from the DC link.

The voltage reference value Udc_ref may suitably be generated by a pre-programmed setpoint value or look up table based on the available power from the wind. So the value Udc_ref may be generated as dependent at least on the available wind power but also factoring in other operational parameters.

The first control module 106 may be any suitable type of controller. It is shown here as a proportional-integral (PI) controller but may alternatively be embodied as a simple proportional controller or a proportional-integral-derivative (PID) controller, or other suitable controller type, as would be apparent to the skilled person. The derivation of controller gains would be within the capabilities of a skilled person.

In order to improve the accuracy of the first control module 106, second summing junction 110 also receives a feed forward signal component 112. That signal component 112 represents a predictive component that is proportional to the DC load and may be derived from foreknowledge of current and likely future operating conditions for the auxiliary loads 28 and the electrolyser 30. Currently it is envisaged that the feedforward component provides an indication of the prevailing load current in the DQ reference frame thereby improving the DC-link load dynamics.

Additional predictive components can also be fed into the outer loop 102 at this point, as is represented by the signal component 114. For example, if damping systems responsible for drivetrain damping and tower oscillatory damping impose a power requirement on the DC link, then the signal component 114 may add a further contributing factor to the output Iref of the first control module 106. In summary, the signal component inputs 112,114 adjust the current reference output of the first control module 106 in order to increase the torque current pulling the required power from the generator 18.

### Figure 3 - inner control loop

The output of the first control module 106, shown here as Iref, is fed to the inner control loop 104 which comprises a second control module 120. The second control module 120 may be a PI controller in a similar way to the first control module 106 or any other suitable type of controller as would be well understood by the skilled person.

The function of the inner control loop 104 is to ensure that the current reference demanded of it by the outer control loop 102 is followed as closely as possible, thereby resulting in an accurate tracking of the DC link voltage, as well as fulfilling the actions of the feedforward components 112,114.

Before the second control module 120, a third summing junction 122 calculates the error (lerr) between the current reference Iref, and a feedback signal (labelled here as Ig_q) that represents the generator current in a DQ reference frame. More specifically, the generator current in this embodiment is the quadrature current related to the generator torque. Since the generator is a permanent magnet generator in this embodiment, the direct current component (d component) is zero because there is no current required to supply field windings.

The feedback signal Ig_q is derived by a measurement module 116 that measures the operational parameters of the generator and converts this to a rotating reference frame consistent with vector machine control, as would be well understood by the skilled person. This is achieved by way of a suitable transformation such as a Park transformation.

The output of the third summing junction 122 (lerr) is therefore input into the second control module 120 which acts to provide an output signal Vg_q_ref, the purpose of which is to serve as an input command to the machine side converter of the primary power converter system 21, in order for it to drive the correct voltage on the DC link. The output signal Vg_q_ref may

in some embodiments be input directly into the primary power converter system 21 via a suitable inverse Park transformation module 124 in order to convert the signal from the DQ reference frame back to a three phase signal in the abc reference frame for the control of the primary power converter system 21.

However, in this embodiment, the output signal Vg_q_ref from the second control module 120 is combined with a feedforward signal component 130 representing the back EMF of the generator in the DQ reference frame which improves dynamic performance.

In summary, therefore, the inner control loop 104 determines the current that is required to be fed onto the DC link of the primary power converter system 21 in order to reduce the voltage error that is calculated by the outer control loop 102. To this end, the outer loop 102 generates the voltage error signal Verr which the controller 106 attempts to reduce to zero by providing current control signal Ig_q. That current control signal is used to derive a torque current error lerr, which is then used by the controller 120 to transform to a generator voltage command signal.

Having described the operation of the control scheme 100 in Figure 3 which is responsible for maintaining the voltage on the DC link of the primary power converter system 21 at a predetermined value or within a predetermined range, the discussion will now turn to the second control scheme 200 as depicted in Figure 4. In a broad sense, the second control scheme has responsibility to manage efficiently the process of optimising the operation of the electrolyser 30 whilst balancing the loads on the DC link 24 connecting thereto during a variety of operational scenarios. Some examples operational examples are described below in more detail to provide a greater appreciation of the benefits of the invention.

In overview, the second control scheme 200 comprises a turbine control module 202, a pitch control module 204 and an electrolyser cell control module 206. Those control modules function in a complimentary manner to ensure that the individual cells of the electrolyser 30 are activated in dependence on the power available from the wind.

The functionality of the different control modules is as follows.

### Turbine control module 202

The turbine control module 202 is configured to calculate the power that is available from the wind during all wind conditions and, in combination with the pitch controller 204, regulates the rotational speed of the rotor 6 for optimal power control. In general, the turbine control module 202 is configured to i) calculate an available wind power signal, shown here as Pavail_wind, and ii) calculate an optimum rotor speed signal, shown here as wr_ref, for maximising the generated power from the rotor 6. For this purpose, the turbine control module 202 receives at least three input signals relating to the turbine operational conditions: measured rotor speed wr, measured pitch angle β, and measured wind speed Vwind.

The turbine control module 202 is therefore configured to output the available wind power signal, Pavail_wind, and the optimum rotor speed signal, wr_ref, to the electrolyser cell control module 206.

### Pitch control module 204

Whereas the signals relating to available wind power Pavail_wind and optimum rotor speed, shown here as wr_ref are calculated by the turbine control module 202, those signals are also input into the pitch control module 204 together with the measured rotor speed signal wr. In turn, the pitch control module 204 calculates a pitch angle reference signal βref which is used to operate a pitch system (not shown) in a manner that would be understood by a skilled person.

Together, the turbine control module 202 and the pitch control module 204 function to optimise the generation of mechanical power of the rotor during partial and full load wind conditions.

Unusually, at part load operation, the pitch control module 204 is configured to control the pitch angle of the blades, by suitable setting of βref to maintain the rotor at a rotation speed that maximises power generation. This may be achieved with the use of a MPPT (maximum power point tracking) algorithm, as would be well understood by a skilled person.

At full load operation, as is detected when wind speed exceeds a full load wind speed threshold, the pitch control module 204 is operable to set βref to limit further power generation.

### Electrolyser cell control module 206

In overview, the responsibility of the cell control module 206 is to ensure that the power consumed by the electrolyser 30 matches or follows the power generated by the generator 18 and the primary power converter system 21. This results in the electrolyser 30 being operated as efficiently as possible in a variety of wind conditions.

More specifically, the cell control module 206 is configured to regulate the number of cells in the electrolyser 30 that are active, thereby using electricity to generate hydrogen gas, in dependence on the power that is available from the wind, at least in some wind conditions. This approach maximises the efficiency of hydrogen production by controlling the current density per cell of the electrolyser to minimise variation, and preferably to be approximately constant.

As can be seen from Figure 4, the cell control module 206 receives several data inputs from various sources. In overview, the cell control module 206 receives the available wind power signal Pavail_wind from the turbine control module 204, an energy availability or state of charge (SoC) signal 220 from the energy storage system 4, a cell health signal 222 from the electrolyser 20 and a power setpoint signal 224. Note that the power setpoint signal 224 maybe a predetermined parameter that is set according to the rated power pf the wind turbine generator. For example, the generator 18 may have a rated power of 5MW, so this may be the standard power setpoint for the generator, or the predetermined value may be set to a lower value in dependence on the required rated power of the electrolyser 30.

Based on these signals, the cell control module 206 is configured to carry out at least one of a number of control functions.

A first example of such a control function is to control the operation of the electrolyser 30, and more specifically the switching state of the individual cells, or groups of cells, within the electrolyser 30. As the power available from the wind varies, the cell control module 206 is configured to be responsive to the available power and switch a number of the cells within the electrolyser to an active state in order to make efficient use of the generated power. The more active cells that are connected in parallel, the higher current level is drawn from the DC link 14.

The precise level of wind power that triggers operational changes may be configurable by appropriate means in the control system. For example, wind speed that represents minimum or 'cut in' power levels, part-load, full load, and intermediate power levels can be defined by an appropriate look up table. Data points in the look up table include power levels that relate wind power levels to activation and deactivation points for each cell or groups of cells in the electrolyser 30.

Other operating characteristics may also be factored into the operation of the cell control module 206. For example instead of or in addition to the available wind power, the cell control module 206 may also take into account the voltage of the DC link 24, the electrical loading of the auxiliary loads 28, the capacity of the energy storage system 4, the health and temperature of the electrolyser cells, and the external power setpoint.

In consideration of the above, therefore, the cell control module 206 may be configured with sophisticated decision algorithm for selecting one or more electrolyser cells for operation based on one or more of the above discussed operating parameters.

As can be seen in Figure 4, the cell control module 206 is operably connected to the switching module 46, as is also depicted in Figures 1 and 2, in order to achieve selectable control over each cell in the electrolyser 30 if required. Other alternatives include that the switching module 46 has the capability to switch groups of cells between active and inactive states. It should be appreciated at this point that the electrolyser cells 40 are shown as directly connected between the bars of the DC link 24. This is for illustrative convenience only and does not imply a particular structural limitation on the form of the electrolyser 30, as has already been described above with reference to Figure 2.

In switching the cells between active (conductive) and inactive (non-conductive states), the switching module 46 may operate on a 'soft switching' principle in which the cell or cells in question are switched between an inactive state and an active state more gradually than would otherwise be the case with a simple electronically controlled two-state switch. For this purpose, the switching module 46 may therefore be configured to implement a pulse-width modulated switching approach in which the cells of the electrolyser 30 are controlled via a switching signal that may be varied between an inactive state, with a 0% duty cycle, and an active state, with a 100% duty cycle. Each of the cell switches (see thyristors 66a-f in Figure 2) may therefore ramp up between inactive and active states by increasing the duty cycle between 0% and 100% over a predetermined time period. Of course, the switching banks 56a,b are illustrated as thyristors in Figure 2, but the skilled person would appreciate that other switch means would be appropriate, such as MOSFETs, JFETs, or IGBTs.

It is currently envisaged that a suitable time period in which to ramp up the switching state of an electrolyser cell would be in the range of 1 to 4 seconds. It should be noted, however, that the precise time period depends on the requirements of the cell stack, the period of typical wind variations, and the load characteristics of the DC link 24.

The benefit of switching the electrolyser cells between inactive and active state with the use of variable duty cycle means that sharp changes in the DC link load current can be avoided, which thereby also avoids unwanted voltage spikes which may affect converter operation.

A further example of a control function carried out by the cell control module 206 is as follows. The cell control module 206 may be configured to be responsive to wind conditions where there is very low wind speed or even zero wind speed. In such circumstances, the turbine controller 202 would set the available wind power signal Pavail_wind to a value that is below a predetermined threshold. In response, the cell control module 206 is operable to disconnect all of the cells of the electrolyser 30 from the DC-link 24 thereby in effect disabling the electrolyser 30 so that it does not produce hydrogen. Therefore, if wind speeds are below a minimum level, which is often known as the 'cut in' wind speed, the cell control module 206 may be configured to disconnect the electrolyser 30 from the DC link 24. This stops the power draw from the DC link 24 due to the electrolyser 30

In such wind conditions, the generator 18 is not generating power, so this compromises the ability of the primary power converter system 21 to supply the DC link 24 with sufficient power to operate the auxiliary loads 28. Additionally, the WPP 1 is typically disconnected from the main grid 12, in an island mode of operation, during such conditions. Therefore, to address this issue, the PPC 5 may operate the energy storage system 4 to supply the DC link 24 with sufficient energy in order to maintain the voltage on the DC link 24 in an acceptable range so that it is able to continue to supply the auxiliary loads 28 with power. The DC link voltage may therefore be maintained by the energy storage system 6. However, since the energy in the storage system 6 is finite, the PPC 5 may be configured to monitor the amount of available energy at the energy storage system 6 in order to determine when the available energy is insufficient to maintain the voltage on the DC-link 24 and, in response, to operate the connecting network 10 to connect the WPP 1 to the main grid 12 such that the main grid 12 supplies power to maintain the voltage level at the DC-link 24 instead.

Alternatively, or additionally, for longer periods of insufficient wind, the cell module controller 206 may be operable to take action so as to reduce the electrical auxiliary loads to a minimum so as to reduce the discharge rate on the energy storage system 4. This may be referred to as 'standby' or 'sleep' mode. The reduced auxiliary loads may be maintained at a minimum level for a predetermined period - for example between 20 and 40 hours or more. The pre-determined period may be set as required within the system, or it may be based on the measured amount of available energy at the energy storage system 6.

The transition to sleep mode of the auxiliary loads 28 may be based on the cell control module 206 acting on a measured predetermined amount of available energy at the energy storage system 6. For example, the cell control module 206 may be configured to trigger the auxiliary loads to sleep mode when it detects that the amount of available energy at the energy storage system SoC has dropped to 30% of its storage capacity. The precise value is not crucial and will depend on the electrical characteristics of the energy storage system 6 and other factors such as a safety margin which should be included for the energy storage system 6 to maintain sleep mode for a required period of time.

Operational scenarios may also include a situation where the control system 5 is interrupted by an external safety system, or from a watchdog alert system for the primary power converter system 21, which can be considered to be a trip of the system. The cell module controller 206 may be configured to recognise a system trip/failure. In response, the cell module controller 206 may be configured to take appropriate safety action by configuring the system to protect the electrolyser 30 and switch to essential electrical loads only. For example, the cell control module 206 may command the primary power converter system 21 to halt operation by suspending PWM control signals, and to open the relevant circuit breakers (not shown), to disconnect the electrolyser 30, and to switch the auxiliary loads 28 to sleep mode so as to be powered using energy from the energy storage system 6. To dissipate excess generated power on the DC link 24, the cell control module 206 may also be configured to operate the power dissipation system 25.

The above exemplary scenarios provide examples of the system response when the wind speed drops to low levels such that efficient operation of the electrolyser 30 cannot be supported.

Usually, however, wind speed dwell periods are temporary. Therefore, the cell control module 206 is operable to monitor the wind speed, via the available wind power signal Pavail_wind, and halt the operation of the energy storage system 4 when sufficient wind power is once again available and to reset the subsystems to their nominal operational states. Therefore, once the wind speed increases to acceptable levels, as is detected by the turbine control module 202, the pitch angle of the blades can be moved to an appropriate pitch angle for power production, whilst the cell control module 206 takes appropriate action to bring the electrolyser 30 into operation by turning selected ones of the cells into an active state. During this part-load operation, in which wind speed is above a minimum level but below a full load level, the cell controller 206 will be operable to match the number of active cells 40 in the electrolyser 30 to the power available in the wind so as to optimise the hydrogen generation efficiency of the electrolyser 30. It shall be appreciated that in this respect the energy storage system 4 and/or the connection to the main grid 12 maintain the WTG 2 in a standby state ready to start generating power when the wind speed increases.

At full load operation, wind speed is such that the turbine control module 204 controls the pitch angle of the blades so as to limit the power generation of the rotor to a set value, as is shown in Figure 4. In such a scenario, one option is for the cell control module 206 to control the electrolyser 30 that that all cells 40 are active and thereby generating hydrogen. However, in an alternative approach to full-load operation, the cell control module 206 may maintain a selected number of cells as inactive even during full-load operation. Such inactive cells can be brought into operation during transient events such as wind gusts where it may be necessary to absorb an amount of excess power from the DC link 24. It may therefore be preferable to activate the 'reserve cells' during short period of excess transient power rather than operate the energy storage system 4. The so called 'reserve cells' may also be useful in the event of failure of other cells in the stack so as to provide a degree of redundancy and therefore prolong the service life of the stack and reduce mean time between failure.

Now turning to the third control aspect, when controlling the WPP 1 according to the schemes described above, transient changes in the environmental conditions such as the wind speed will lead to instantaneous power differences between the power generated by the WTG 2 and the power consumed by the hydrogen generating system 3. However, the WPP 1 of the present invention provides a power balancing functionality through operation of the energy storage system 4 and/or the selective connection to the main grid 12 through the connecting network 10. In general, the power balancing functionality is provided by the energy storage system 4, with the WPP 1 in a disconnected or islanded mode of operation. However, the connection to the main grid 12 may provide additional redundancy and power balancing functionality in certain conditions, for example due to the finite energy capacity of the energy storage system 4 and/or to take advantage of favourable energy tariffs or demands.

In particular, the PPC 5 is configured to monitor the available wind power under current conditions and detect when excess power is available. This may be because of a sustained period of elevated wind speed, or a relatively short gust of wind. In response, the PPC 5 may be configured to operate the energy storage system 4 to absorb electrical energy from the WTG bus 19 when it is determined that power available from the wind is greater than a predetermined value, thereby avoiding a rise in voltage on the DC link 24. The predetermined wind power may be determined in various ways and is linked to the wind power that is required to maintain the DC link 24 at a voltage level sufficient to ensure efficient operation of the electrolyser 30. In some examples, the predetermined wind power may further ensure that the energy storage system 6 is maintained to a predetermined capacity, e.g. 70% SoC, which allows some headroom for transient power absorption. If the available power is predicted to increase above that pre-determined value, then the PPC 5 can take the necessary action to command excess generated power to be absorbed by the energy storage system 6 as described above.

However, as the energy storage capacity of the energy storage system 4 is finite, the PPC 5 may be further configured to operate the connecting network 10 to enter the grid connected mode of operation and thereby to supply the excess power to the main grid 12 when the amount of energy stored at the energy storage system 4 exceeds a threshold amount for example.

Additionally, by the same logic, the PPC 5 may detect that insufficient power is available from the wind to meet the power demand of the hydrogen generating system 3, for example due to a sustained or a relatively short period of reduced wind speed. In response, the PPC 5 may be configured to operate the energy storage system 4 to supply electrical energy to the WTG bus 19 and, in turn, the DC link 24 connected to the electrolyser 30 when it is determined that power available from the wind is less than a predetermined value, thereby avoiding a drop in voltage on the DC link 24. Again, the predetermined wind power may be determined in various ways and is linked to the wind power that is required to maintain the DC link voltage at a voltage level sufficient to ensure efficient operation of the electrolyser 30 and, optionally, to ensure that the energy storage system 4 is maintained to a predetermined capacity, e.g. 70% SoC. If the available power is predicted to drop below that pre-determined value, the PPC 5 can take the necessary action to command additional power to be supplied by the energy storage system 4 as described above.

However, as the energy storage capacity of the energy storage system 4 is finite, the PPC 5 may be further configured to operate the connecting network 10 to connect to the main grid 12 and thereby to supply additional power from the main grid 12 when the amount of energy stored at the energy storage system 4 falls below a threshold amount for example. In this respect, the threshold value may be a predetermined minimum capacity, e.g. 70% SoC, of the energy storage system 4.

Advantageously, therefore, the energy storage system 4 together with the main grid 12 can be used as a power balancing means to absorb excess energy from the DC link or supply energy to the DC link in various scenarios thereby to increase the capability of the WPP 1 to maintain the DC link voltage within an acceptable range for efficient operation of the electrolyser 30.

Further thresholds may be put in place to trigger other actions, such as operation of the power dissipation system 25.

In another alternative, the PPC 5 may be configured to use the excess power on the DC link of the primary power converter system 21 to apply a braking force to the rotor 6. In this way, the inertia of the rotor 6 in effect absorbs electrical energy from the DC link by the application of the applied braking force through the generator.

The magnitude of the available power from the wind may be determinative over which system is selected to absorb power from the WTG bus 19. Therefore, the selection of which energy absorption system (e.g. power dissipation system 25, energy storage system 4, electrolyser cells 40, main rotor 6, main grid 12) may be dependent on, or be a function of, the available wind power. In principle, the energy storage system 4 may be configured automatically to draw current as required from the WTG bus 19 during operation in order to maintain a threshold SoC, whilst maintaining a suitable SoC headroom so as to be able to absorb power spikes. The energy storage system 4 therefore becomes the first piece of equipment to provide power absorption and supply. If the energy storage system 4 does not have capacity to absorb further power, then the power dissipation system 25 may be identified as the second priority system to absorb excess power from the WTG bus 19 because it is fast acting and can dissipate large amounts of power as heat. A lower priority power absorption function is the inertia of the rotor 6, as discussed above, and a last resort may be to rely on the connection to the main grid 12, unless energy tariffs are particularly favourable for example.

In a further alternative, when operating in a grid connected mode of operation, the PPC 5 may be configured to operate the energy storage system 4 to provide power to, or receive power from, the main grid 16 to provide a grid ancillary service, such as a downward frequency regulating service (e.g. during an overfrequency event) or an upward frequency regulating service (e.g. during an underfrequency event). To provide such services, the PPC 5 may operate the connecting network 10 to connect the energy storage system 4 to the main grid 16 in addition to, or as an alternative to, the WTG bus 19, for example by closing the first, second and third switching devices 11b, 11c, 11d. During such periods, the PPC 5 may further operate the WTG 2 in a standby or non-generating mode of operation, for example due to a lack of sufficient wind speed.

In another alternative, when operating in a grid connected mode of operation, the PPC 5 may be configured to operate the hydrogen generating system 3 as a load to provide a grid ancillary service to the main grid, such as a downward frequency regulating service (e.g. during an overfrequency event). To provide this service, the PPC 5 may operate the connecting network 10 to connect the main grid 16 to the DC-link 24 of the hydrogen generating system 3, for example by closing the first and second switching devices 11b, 11c, while the third switching device 11d remains open. As above, the PPC 5 may further operate the WTG 2 during such periods in a standby or non-generating mode of operation.

In yet another alternative, when operating in a grid connected mode of operation, the PPC 5 may operate the connecting network 10, and/or the energy storage system 4, such that there is an average net-zero power transfer from the grid. In other words, the energy storage system 4 may be operated as an energy buffer during power transients in the grid-connected mode of hydrogen production, absorbing and discharging power as necessary to maintain a net-zero energy transfer from the main grid 12.

In a further alternative, when operating in an island mode of operation, the PPC 5 may operate the connecting network 10, and/or the energy storage system 4, to exchange energy at the energy storage system 4 to provide MPPT as the rotor speed of the WTG 2 is varied.

In the above discussion, various embodiments and operational scenarios have been discussed within the scope of the inventive concept. The skilled person would understand, however, that over variants would be possible without departing from the inventive concept as defined by the claims.

## Claims

1. A renewable energy power plant for connection to a power network, the renewable energy power plant comprising:
a wind turbine generator (2);
a hydrogen generating system (3) comprising:
a hydrogen electrolysis system (30) configured to generate hydrogen through electrolysis using power generated by the wind turbine generator (2); and
a power converter system (22) configured to provide a DC voltage input source (24) for electrically coupling the wind turbine generator to the hydrogen electrolysis system;
a connecting network configured for selectively connecting the power plant to the power network:
a power balancing system comprising one or more energy sources and one or more energy loads for balancing electrical power differences between the power generated by the wind turbine generator and the power consumed by the hydrogen electrolysis system; and
a control system (5) configured to control the wind turbine generator, the connecting network, the power balancing system, and the hydrogen electrolysis system (30) to control the voltage on the DC voltage input source (24) to remain within a predetermined range,
wherein the one or more energy sources, and/or the one or more energy loads, of the power balancing system comprise:
an energy storage system, optionally, wherein the energy storage system includes at least one of a battery energy storage system and a fuel cell system;
a dispatchable energy source, optionally, wherein the dispatchable energy source is a diesel generator unit; and optionally
a power dissipation element of the power converter system,
wherein the control system is configured to control the connecting network to selectively connect the wind turbine generator to the power network to control the renewable energy power plant in an island mode of operation or a grid connected mode of operation.
**characterised in that** the power balancing system comprises the energy storage system and the control system is configured to control the connecting network to switch from the island mode of operation to the grid connected mode of operation in dependence on:
the power available from the energy storage system falling below a lower threshold value;
the power available from the energy storage system rising above an upper threshold value.

2. A renewable energy power plant according to claim 1, wherein the control system is configured to control the power plant to supply additional power to the power converter system when the control system determines that the power available from the wind is less than a predetermined value, thereby avoiding a drop in voltage on the DC voltage of the power converter system, by controlling:
the power balancing system to supply power from at least one of the one or more energy sources, and/or
the connecting network to supply power from the power network.

3. A renewable energy power plant according to claim 1 or claim 2, wherein the control system is configured to control
the power plant to receive excess power from the wind turbine generator when the control system determines that the power available from the wind is greater than a predetermined value, thereby avoiding a rise in voltage on the DC voltage of the power converter system, by controlling:
the power balancing system to supply power to at least one of the one or more energy loads; and/or
the connecting network to supply power to the power network.

4. A renewable energy power plant according to claim 1, wherein the control system is configured to control connecting network to switch from the grid connected mode of operation to the island mode of operation in dependence on wind speed falling below a predetermined minimum wind speed.

5. A renewable energy power plant according to any preceding claim, further comprising:
one or more auxiliary systems of the wind turbine generator, and/or the hydrogen electrolysis system, forming one or more auxiliary loads provided with operating power from at least one of the one or more energy sources of the power balancing system, and/or the power network; and
wherein the control system is further configured to control the auxiliary loads to control the DC voltage of the power converter system to remain with a predetermined range.

6. A renewable energy power plant according to claim 5, wherein the renewable energy power plant further comprises a start-up energy source configured for powering at least one of the auxiliary systems of the wind turbine generator to maintain the wind turbine generator in a standby-mode during a non-generating period, such that the wind turbine generator is operable to start generating power upon demand.

7. A renewable energy power plant according to claim 6, wherein the start-up energy source is provided by at least one of the one or more energy sources of the power balancing system.

8. A renewable energy power plant according to any of claims 5 to 7, wherein the control system is further configured to detect wind speed falling below a predetermined minimum wind speed, and to carry out the following control actions: i) disable operation of the hydrogen electrolyser system, and ii) operate the connecting network and/or the power balancing system to provide power to the one or more auxiliary loads.

9. A renewable energy power plant according to claim 8, wherein the control system is further configured to control the one or more auxiliary loads to reduce a power requirement therefrom.

10. A renewable energy power plant according to any one of the preceding claims, wherein the hydrogen electrolysis system further comprises:
a plurality of electrolysis cells arranged in one or more stacks, wherein each electrolysis cell comprises a pair of electrodes, and wherein each stack of electrolysis cells comprises at a plurality of electrical connectors each of which is in electrical contact with an electrode of an electrolysis cell,
wherein the electrical connectors are electrically connectable to the power converter system by a network of selectively operable electrical conductors which are configured so that some or all of the electrolysis cells are operable in dependence on the operative condition of the selectively operable electrical conductors.

11. A renewable energy power plant according to claim 10, wherein the electrical connectors of at least one stack of electrolysis cells are configured so that electrical current may enter the stack at a plurality of locations.

12. A renewable energy power plant according to claims 10 or 11, wherein the electrical connectors of at least one stack of electrolysis cells are configured so that electrical current may exit the stack at a plurality of locations.

13. A renewable energy power plant according to any one of claims 10 to 12, wherein the control system is configured to control the selectively operable electrical conductors to enable all of the electrolysis cells when a monitored one or more operating characteristics are within a predetermined range of operation, and to enable only a portion of the electrolysis cells when the one or more monitored operating characteristics are outside of the predetermined range of operation.

14. A renewable energy power plant according to claim 13, when dependent on claim 5, wherein the one or more monitored operating characteristics include at least one of:
i) available wind power;
ii) DC voltage;
iii) the one or more auxiliary loads;
iv) electrolyser cell health; and/or
v) electrolyser cell temperature.

15. A renewable energy power plant according to any preceding claim, wherein the wind turbine generator (2) comprises:
a rotor (6) coupled to a generator (18),
a primary power converter (21) coupled to the generator; and
a wind turbine transformer (23) for stepping-up the voltage level of the power output from the primary power converter to a voltage level of the main grid (12); and
wherein the hydrogen generating system (3) comprises:
a second power converter (22) for electrically coupling a low voltage side of the wind turbine transformer to a hydrogen electrolysis system (30).

## Patentansprüche

1. Kraftwerk für erneuerbare Energien zur Verbindung mit einem Leistungsnetzwerk, wobei das Kraftwerk für erneuerbare Energien Folgendes umfasst:
eine Windkraftanlage (2);
ein Wasserstofferzeugungssystem (3), umfassend:
ein Wasserstoffelektrolysesystem (30), das so konfiguriert ist, dass es Wasserstoff durch Elektrolyse unter Verwendung der von der Windkraftanlage (2) erzeugten Leistung erzeugt; und
ein Leistungswandlersystem (22), das so konfiguriert ist, dass es eine Gleichspannungseingangsquelle (24) zum elektrischen Koppeln der Windkraftanlage mit dem Wasserstoffelektrolysesystem bereitstellt;
ein Verbindungsnetzwerk, das zum selektiven Verbinden des Kraftwerks mit dem Leistungsnetzwerk konfiguriert ist;
ein Leistungsausgleichssystem, umfassend eine oder mehrere Energiequellen und eine oder mehrere Energielasten, zum Ausgleichen der elektrischen Leistungsdifferenzen zwischen der durch die Windkraftanlage erzeugten Leistung und der durch das Wasserstoffelektrolysesystem verbrauchten Leistung; und
ein Steuersystem (5), das so konfiguriert ist, dass es die Windkraftanlage, das Verbindungsnetzwerk, das Leistungsausgleichssystem und das Wasserstoffelektrolysesystem (30) steuert, um die Spannung an der Gleichspannungseingangsquelle (24) so zu steuern, dass sie innerhalb eines vorbestimmten Bereichs verbleibt,
wobei die eine oder die mehreren Energiequellen, und/oder die eine oder die mehreren Energielasten des Leistungsausgleichssystems Folgendes umfassen:
ein Energiespeichersystem, wahlweise, wobei das Energiespeichersystem mindestens eines von einem Batterie-Energiespeichersystem und einem Brennstoffzellensystem einschließt;
eine regelbare Energiequelle, wahlweise, wobei die regelbare Energiequelle eine Dieselgeneratoreinheit ist; und wahlweise
ein Verlustleistungselement des Leistungswandlersystems,
wobei das Steuersystem so konfiguriert ist, dass es das Verbindungsnetzwerk steuert, um die Windkraftanlage selektiv mit dem Leistungsnetzwerk zu verbinden, um so das Kraftwerk für erneuerbare Energien in einem Inselbetriebsmodus oder einem netzgekoppelten Betriebsmodus zu steuern,
**dadurch gekennzeichnet, dass** das Leistungsausgleichssystem das Energiespeichersystem umfasst und das Steuersystem so konfiguriert ist, dass es das Verbindungsnetzwerk so steuert, dass es vom Inselbetriebsmodus zum netzgekoppelten Betriebsmodus umschaltet, in Abhängigkeit von Folgendem:
die vom Energiespeichersystem verfügbare Leistung fällt unter einen unteren Schwellenwert;
die vom Energiespeichersystem verfügbare Leistung steigt über einen oberen Schwellenwert an.

2. Kraftwerk für erneuerbare Energien nach Anspruch 1, wobei das Steuersystem so konfiguriert ist, dass es das Kraftwerk so steuert, dass es dem Leistungswandlersystem zusätzliche Leistung zuführt, wenn das Steuersystem feststellt, dass die vom Wind verfügbare Leistung geringer ist als ein vorbestimmter Wert, wodurch ein Abfall bei der Spannung an der Gleichspannung des Leistungswandlersystems vermieden wird, durch Steuern von Folgendem:
des Leistungsausgleichssystems, um Leistung aus mindestens einer von der einen oder den mehreren Energiequellen zuzuführen, und/oder
des Verbindungsnetzwerkes, um Leistung aus dem Leistungsnetzwerk zuzuführen.

3. Kraftwerk für erneuerbare Energien nach Anspruch 1 oder Anspruch 2, wobei das Steuersystem so konfiguriert ist, dass es das Kraftwerk so steuert, dass es überschüssige Leistung von der Windkraftanlage aufnimmt, wenn das Steuersystem feststellt, dass die vom Wind verfügbare Leistung größer ist als ein vorbestimmter Wert, wodurch ein Anstieg bei der Spannung an der Gleichspannung des Leistungswandlersystems vermieden wird, durch Steuern von Folgendem:
des Leistungsausgleichssystems, um Leistung mindestens einer von der einen oder den mehreren Energielasten zuzuführen; und/oder
des Verbindungsnetzwerkes, um dem Leistungsnetzwerk Leistung zuzuführen.

4. Kraftwerk für erneuerbare Energien nach Anspruch 1, wobei das Steuersystem so konfiguriert ist, dass es das Verbindungsnetzwerk so steuert, dass es, in Abhängigkeit davon, ob die Windgeschwindigkeit unter eine vorbestimmte Mindestwindgeschwindigkeit fällt, vom netzgekoppelten Betriebsmodus zum Inselbetriebsmodus umschaltet.

5. Kraftwerk für erneuerbare Energien nach einem vorstehenden Anspruch, weiter umfassend: ein oder mehrere Hilfssysteme der Windkraftanlage und/oder des Wasserstoffelektrolysesystems, die eine oder mehrere Hilfslasten bilden, die mit Betriebsleistung aus mindestens einer von der einen oder den mehreren Energiequellen des Leistungsausgleichssystems und/oder dem Leistungsnetzwerk versorgt werden; und
wobei das Steuersystem weiter so konfiguriert ist, dass es die Hilfslasten steuert, um die Gleichspannung des Leistungswandlersystems so zu steuern, dass sie in einem vorbestimmten Bereich verbleibt.

6. Kraftwerk für erneuerbare Energien nach Anspruch 5, wobei das Kraftwerk für erneuerbare Energien weiter eine Anlaufenergiequelle umfasst, die konfiguriert ist zum Speisen mindestens eines der Hilfssysteme der Windkraftanlage, um die Windkraftanlage während einer Nicht-Erzeugungsperiode in einem Bereitschaftsmodus zu halten, sodass die Windkraftanlage betriebsbereit ist, um bei Bedarf zu beginnen, Leistung zu erzeugen.

7. Kraftwerk für erneuerbare Energien nach Anspruch 6, wobei die Anlaufenergiequelle von mindestens einer von der einen oder den mehreren Energiequellen des Leistungsausgleichssystems bereitgestellt wird.

8. Kraftwerk für erneuerbare Energien nach einem der Ansprüche 5 bis 7, wobei das Steuersystem weiter so konfiguriert ist, dass es eine Windgeschwindigkeit erkennt, die unter eine vorbestimmte Mindestwindgeschwindigkeit fällt, und die folgenden Steuerungsmaßnahmen ausführt: i) Abschalten des Betriebs des Wasserstoff-Elektrolyseursystems und ii) Betreiben des Verbindungsnetzwerkes und/oder des Leistungsausgleichssystems, um der einen oder den mehreren Hilfslasten Leistung bereitzustellen.

9. Kraftwerk für erneuerbare Energien nach Anspruch 8, wobei das Steuersystem weiter so konfiguriert ist, dass es die eine oder die mehreren Hilfslasten steuert, um einen Leistungsbedarf von denselben zu verringern.

10. Kraftwerk für erneuerbare Energien nach einem der vorstehenden Ansprüche, wobei das Wasserstoffelektrolysesystem weiter Folgendes umfasst:
eine Vielzahl von Elektrolysezellen, die in einem oder mehreren Stapeln angeordnet sind, wobei jede Elektrolysezelle ein Paar von Elektroden umfasst und wobei jeder Stapel von Elektrolysezellen eine Vielzahl von elektrischen Verbindern aufweist, von denen jeder in elektrischem Kontakt mit einer Elektrode einer Elektrolysezelle steht,
wobei die elektrischen Verbinder über ein Netzwerk von selektiv betriebsbereiten elektrischen Leitern elektrisch mit dem Leistungswandlersystem verbunden werden können, die so konfiguriert sind, dass einige oder alle von den Elektrolysezellen in Abhängigkeit vom Betriebszustand der selektiv betriebsbereiten elektrischen Leiter betriebsbereit sind.

11. Kraftwerk für erneuerbare Energien nach Anspruch 10, wobei die elektrischen Verbinder mindestens eines Stapels von Elektrolysezellen so konfiguriert sind, dass elektrischer Strom an einer Vielzahl von Stellen in den Stapel eintreten kann.

12. Kraftwerk für erneuerbare Energien nach Anspruch 10 oder 11, wobei die elektrischen Verbinder mindestens eines Stapels von Elektrolysezellen so konfiguriert sind, dass elektrischer Strom an einer Vielzahl von Stellen aus dem Stapel austreten kann.

13. Kraftwerk für erneuerbare Energien nach einem der Ansprüche 10 bis 12, wobei das Steuersystem so konfiguriert ist, dass es die selektiv betriebsbereiten elektrischen Leiter so steuert, dass alle Elektrolysezellen aktiviert werden, wenn sich eine oder mehrere überwachte Betriebskenngrößen innerhalb eines vorbestimmten Betriebsbereichs befinden, und dass nur ein Teil der Elektrolysezellen aktiviert wird, wenn sich die eine oder die mehrere überwachte Betriebskenngrößen außerhalb des vorbestimmten Betriebsbereichs befinden.

14. Kraftwerk für erneuerbare Energien nach Anspruch 13, wenn abhängig von Anspruch 5, wobei die eine oder die mehreren überwachten Betriebskenngrößen mindestens eine von folgenden einschließen:
i) verfügbare Windenergie;
ii) Gleichspannung;
iii) die eine oder die mehreren Hilfslasten;
iv) Elektrolyseurzellenzustand und/oder
v) Elektrolyseurzellentemperatur.

15. Kraftwerk für erneuerbare Energien nach einem vorstehenden Anspruch, wobei die Windkraftanlage (2) Folgendes umfasst:
einen Rotor (6), der mit einem Generator (18) gekoppelt ist,
einen primären Leistungswandler (21), der mit dem Generator gekoppelt ist; und
einen Windkraftanlagentransformator (23) zum Anheben der Spannung der Ausgangsleistung vom primären Leistungswandler auf eine Spannung des Hauptnetzes (12); und
wobei das Wasserstofferzeugungssystem (3) Folgendes umfasst:
einen zweiten Leistungswandler (22) zum elektrischen Koppeln einer Niederspannungsseite des Windkraftanlagentransformators mit einem Wasserstoffelektrolysesystem (30).

## Revendications

1. Centrale électrique à énergie renouvelable destinée à être connectée à un réseau de puissance, la centrale électrique à énergie renouvelable comprenant :
un générateur d'éolienne (2) ;
un système de génération d'hydrogène (3) comprenant :
un système d'électrolyse d'hydrogène (30) configuré pour générer de l'hydrogène par électrolyse en utilisant la puissance générée par le générateur d'éolienne (2) ; et
un système de convertisseur de puissance (22) configuré pour fournir une source d'entrée de tension CC (24) pour coupler électriquement le générateur d'éolienne au système d'électrolyse d'hydrogène ;
un réseau de connexion configuré pour raccorder sélectivement la centrale électrique au réseau de puissance ;
un système d'équilibrage de puissance comprenant une ou plusieurs sources d'énergie et une ou plusieurs charges d'énergie pour équilibrer des différences de puissance électrique entre la puissance générée par le générateur d'éolienne et la puissance consommée par le système d'électrolyse d'hydrogène ; et
un système de commande (5) configuré pour commander le générateur d'éolienne, le réseau de connexion, le système d'équilibrage de puissance et le système d'électrolyse d'hydrogène (30) pour réguler la tension sur la source d'entrée de tension CC (24) pour qu'elle reste dans une plage prédéterminée,
dans laquelle les une ou plusieurs sources d'énergie et/ou les une ou les plusieurs charges d'énergie du système d'équilibrage de puissance comprennent :
un système de stockage d'énergie, facultativement, dans laquelle le système de stockage d'énergie inclut au moins un d'un système de stockage d'énergie à batterie et d'un système de pile à combustible ;
une source d'énergie distribuable, facultativement, dans laquelle la source d'énergie distribuable est un groupe électrogène diesel ; et facultativement
un élément de dissipation de puissance du système de convertisseur de puissance,
dans laquelle le système de commande est configuré pour commander le réseau de connexion pour raccorder de manière sélective le générateur d'éolienne au réseau de puissance pour commander la centrale électrique à énergie renouvelable dans un mode de fonctionnement en îlot ou un mode de fonctionnement connecté au réseau,
**caractérisée en ce que** le système d'équilibrage de puissance comprend le système de stockage d'énergie et le système de commande est configuré pour commander le réseau de connexion pour passer du mode de fonctionnement en îlot au mode de fonctionnement connecté au réseau en fonction :
de la puissance disponible du système de stockage d'énergie tombant sous une valeur seuil inférieure ;
de la puissance disponible du système de stockage d'énergie dépassant une valeur seuil supérieure.

2. Centrale électrique à énergie renouvelable selon la revendication 1, dans laquelle le système de commande est configuré pour commander la centrale électrique pour fournir de la puissance supplémentaire au système de convertisseur de puissance lorsque le système de commande détermine que la puissance disponible du vent est inférieure à une valeur prédéterminée, ce qui permet d'éviter une chute de tension sur la tension CC du système de convertisseur de puissance, en commandant :
le système d'équilibrage de puissance pour fournir de la puissance à partir d'au moins une des une ou plusieurs sources d'énergie, et/ou
le réseau de connexion pour fournir de la puissance à partir du réseau de puissance.

3. Centrale électrique à énergie renouvelable selon la revendication 1 ou la revendication 2, dans laquelle le système de commande est configuré pour commander la centrale électrique pour recevoir l'excédent de puissance en provenance du générateur d'éolienne lorsque le système de commande détermine que la puissance disponible du vent est supérieure à une valeur prédéterminée, ce qui permet d'éviter une augmentation de tension sur la tension CC du système de convertisseur de puissance, en commandant :
le système d'équilibrage de puissance pour fournir de la puissance à au moins une des une ou plusieurs charges d'énergie ; et/ou
le réseau de connexion pour fournir de la puissance au réseau de puissance.

4. Centrale électrique à énergie renouvelable selon la revendication 1, dans laquelle le système de commande est configuré pour commander le réseau de connexion pour passer du mode de fonctionnement connecté au réseau au mode de fonctionnement en îlot en fonction de la vitesse du vent qui tombe sous une vitesse du vent minimale prédéterminée.

5. Centrale électrique à énergie renouvelable selon une quelconque revendication précédente, comprenant en outre : un ou plusieurs systèmes auxiliaires du générateur d'éolienne et/ou le système d'électrolyse d'hydrogène, formant une ou plusieurs charges auxiliaires alimentées en puissance de fonctionnement par au moins une des une ou plusieurs sources d'énergie du système d'équilibrage de puissance, et/ou le réseau de puissance ; et
dans laquelle le système de commande est en outre configuré pour commander les charges auxiliaires pour commander la tension CC du système de convertisseur de puissance pour qu'elle reste dans une plage prédéterminée.

6. Centrale électrique à énergie renouvelable selon la revendication 5, dans laquelle la centrale électrique à énergie renouvelable comprend en outre une source d'énergie de démarrage configurée pour alimenter au moins un des systèmes auxiliaires du générateur d'éolienne pour maintenir le générateur d'éolienne dans un mode veille pendant une période de non-production, de telle sorte que le générateur d'éolienne puisse fonctionner pour commencer à générer de la puissance sur demande.

7. Centrale électrique à énergie renouvelable selon la revendication 6, dans laquelle la source d'énergie de démarrage est fournie par au moins une des une ou plusieurs sources d'énergie du système d'équilibrage de puissance.

8. Centrale électrique à énergie renouvelable selon l'une quelconque des revendications 5 à 7, dans laquelle le système de commande est en outre configuré pour détecter une vitesse du vent tombant sous une vitesse du vent minimale prédéterminée et pour effectuer les actions de commande suivantes : i) désactiver le fonctionnement du système d'électrolyseur d'hydrogène et ii) faire fonctionner le réseau de connexion et/ou le système d'équilibrage de puissance pour fournir de la puissance aux une ou plusieurs charges auxiliaires.

9. Centrale électrique à énergie renouvelable selon la revendication 8, dans laquelle le système de commande est en outre configuré pour commander les une ou les plusieurs charges auxiliaires pour réduire une exigence de puissance de celles-ci.

10. Centrale électrique à énergie renouvelable selon l'une quelconque des revendications précédentes, dans laquelle le système d'électrolyse d'hydrogène comprend en outre :
une pluralité de cellules d'électrolyse agencées en une ou plusieurs piles, dans laquelle chaque cellule d'électrolyse comprend une paire d'électrodes et dans laquelle chaque pile de cellules d'électrolyse comprend au niveau d'une pluralité de connecteurs électriques, qui sont chacun en contact électrique avec une électrode d'une cellule d'électrolyse,
dans laquelle les connecteurs électriques peuvent être raccordés électriquement au système de convertisseur de puissance par un réseau de conducteurs électriques sélectivement actionnables qui sont configurés de telle sorte que certaines, ou la totalité, des cellules d'électrolyse puissent fonctionner en fonction de l'état de fonctionnement des conducteurs électriques sélectivement actionnables.

11. Centrale électrique à énergie renouvelable selon la revendication 10, dans laquelle les connecteurs électriques d'au moins une pile de cellules d'électrolyse sont configurés de telle sorte que du courant électrique puisse entrer dans la pile au niveau d'une pluralité d'emplacements.

12. Centrale électrique à énergie renouvelable selon les revendications 10 ou 11, dans laquelle les connecteurs électriques d'au moins une pile de cellules d'électrolyse sont configurés de telle sorte que du courant électrique puisse sortir de la pile au niveau d'une pluralité d'emplacements.

13. Centrale électrique à énergie renouvelable selon l'une quelconque des revendications 10 à 12, dans laquelle le système de commande est configuré pour commander les conducteurs électriques sélectivement actionnables pour activer la totalité des cellules d'électrolyse lorsqu'une ou plusieurs caractéristiques de fonctionnement surveillées sont dans une plage de fonctionnement prédéterminée, et pour activer seulement une partie des cellules d'électrolyse lorsque les une ou plusieurs caractéristiques de fonctionnement surveillées sont hors de la plage de fonctionnement prédéterminée.

14. Centrale électrique à énergie renouvelable selon la revendication 13, lorsqu'elle dépend de la revendication 5, dans laquelle les une ou plusieurs caractéristiques de fonctionnement surveillées incluent au moins une :
i) de la puissance disponible du vent ;
ii) de la tension CC ;
iii) des une ou plusieurs charges auxiliaires ;
iv) de la santé des cellules d'électrolyseur ; et/ou
v) de la température des cellules d'électrolyseur.

15. Centrale électrique à énergie renouvelable selon une quelconque revendication précédente, dans laquelle le générateur d'éolienne (2) comprend :
un rotor (6) couplé à un générateur (18),
un convertisseur de puissance primaire (21) couplé au générateur ; et
un transformateur d'éolienne (23) pour élever le niveau de tension de la puissance de sortie du convertisseur de puissance primaire à un niveau de tension du réseau principal (12) ; et
dans laquelle le système de génération d'hydrogène (3) comprend :
un second convertisseur de puissance (22) pour coupler électriquement un côté basse tension du transformateur d'éolienne à un système d'électrolyse d'hydrogène (30).
